# EUROPEAN PATENT APPLICATION

(11) **EP 3 223 247 A1**
(43) Date of publication of application: **27.09.2017**
(21) Application number: 16305339.0
(22) Date of filing: 24.03.2016
(51) Int. Cl.: G06T 19/20

(54) **BOOLEAN OBJECT MANAGEMENT IN 3D DISPLAY**

(71) Applicant: Ecole Nationale de l'Aviation Civile, 31400 Toulouse Cedex (FR)
(72) Inventor: HURTER, Christophe, 31000 Toulouse (FR); TRAORÉ SOMPAGNIMDI, Michael, 31055 Toulouse (FR)
(74) Representative: Bell, Mark

(57) **Abstract**

The objects present in a particular computer generated 3d environment are represented to a user as distributed amongst a plurality of display area. The relative positions of the objects are maintained, and whenever an object is removed from one display area it is added to another. The point of view presented to the user may be the same for each display area, with all being controlled together, or separate control may be provided for each area or sub-group of areas.

## Description

### Field of the invention

The present invention relates to the assisted exploration of computer generated virtual environments, and in particular the identification of discrete objects in such environments.

### Background of the invention

Volumetric datasets are found in many fields, such as engineering, material sciences, medical imaging, astrophysics. The exploration of volumetric datasets is not trivial, and is heavily impacted by the specific needs of users. In most airports for example, security agents deal with such data exploration in the context of baggage inspections. X-ray and tomography are two commonly used fluoroscopic scanning systems. X-ray systems provide a flattened 2D luggage scan while tomography systems produce transversal scans, also called slices. Thanks to data processing techniques such as the Radon transform, these systems can produce a full 3D scan, comprising a set of voxels with corresponding density data. Since the resulting X-ray scanned image only contains voxel or pixel densities, it cannot display the original material colours. The standard colour visual mapping uses three different colours (orange, green, and blue) to display the data density. Orange colour corresponds to low density (mainly organic items). In opposition, blue colour is used for high density values (i.e. metal). In the case of X-ray systems, green colour corresponds to the superposition of different kinds of materials or average density materials.

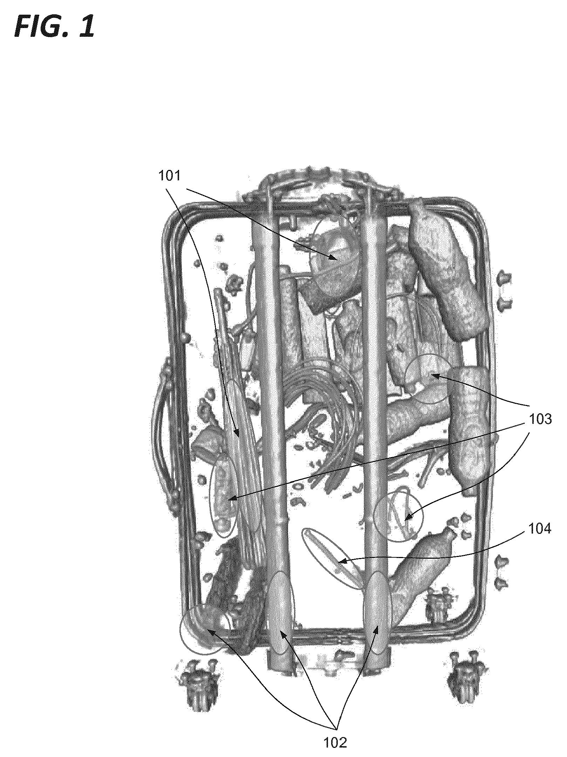

Figure 1 demonstrates some of the ways in which an article may be obscured in a scan. As shown in figure 1, the displayed 2D scanned image can suffer from four issues:
**Superposition:** A threat (e.g. prohibited object like knife, cutter...) may be sheltered behind dense materials. Sometimes, it's possible to see through this blind shield using functionalities such as high penetration (enhanced X-ray power) or image processing (contrast improvement). As shown in figure 1, the umbrella and dense collection of objects in the upper right hand corner 101 may obscure articles of interest.
**Location:** Depending on its location inside the luggage, a threat can be difficult to detect. Objects located in the corners, in the edges or inside the luggage's frame are very difficult to identify. As shown in figure 1, the retractable trolley bars and the rigid corners of the case 102 may obscure articles of interest.
**Dissociation:** Another way to dissimulate a threat is to separate and to spread parts of it in the luggage (weapons or explosives are composed of many separated items like the trigger, the barrel...). This dissociation can be combined with other dissimulation techniques. As shown in figure 1, a number of apparently non-descript items 103 are present which are unlikely to attract particular attention, but which may be assembled to form some article of interest.
**Lure:** An ill-intentioned individual may use a lure to hide the real threat. For instance, a minor threat like a small scissors may be clearly visible and catch security agent's attention while a more important threat remains hidden. As shown in figure 1, the metal rod 104 may attract the attention of the user, drawing it away from some less visible threat.

Volumetric data exploration with direct volume rendering techniques is of great help to visually extract relevant structures in many fields of science: medical imaging, astrophysics and more recently in luggage security. To leverage this knowledge extraction, many techniques have been developed. A number of existing basic technologies are known in this field, including volume visualization, transfer function, direct voxel manipulation and focus plus context interaction.

In particular, volume visualization can be done with geometric rendering system which transforms the data into a set of polygons representing an iso-surface. The contour tree algorithm and other alternatives such as branch decomposition are usually used to find these iso-surfaces. Contour tree algorithms may be vulnerable to noise, which can be problematic in luggage inspections since dense materials such as steel cause noise by reflecting the X-rays.

In order to investigate volumetric dataset, one can use the Transfer Function (TF). In practice, this maps the voxel density with a specific colour (including its transparency). Transfer functions can be 1, 2 or n dimensional and are of great help to isolate structures of interest in volumetric data. Thanks to the colour blending process, a suitable transfer function can also reveal iso-surfaces or hide density to improve the volumetric data visualization.

A specific difficulty that arises in an environment such as that described with respect to figure 1 is that the user's view of a particular article of interest will often be obscured by a number of other objects of no interest. In order to better view the objects of interest, the user may wish to isolate or highlight objects of interest, or selectively remove or render less visible interfering objects. On the other hand, when a user starts to modify the representation of the environment in this way, the inherent link between the representation and reality is broken, and it is easy for the user to become disorientated and lose track of objects or their interrelations. It is desirable to provide ways to manage objects and their representations to avoid or reduce such issues.

### Summary of the invention

In accordance with a first aspect there is provided a method for managing display of multiple objects having a predefined spatial relationship in a three dimensional computer generated environment, comprising the steps of displaying a graphical representation of a first subset of the objects in their respective spatial relationships in a first display area, and displaying a graphical representation of all of the objects not belonging to said first subset in their respective spatial relationships in one or more further display areas. A selected object is removed from either the first display area or one of the further display areas, and added to the graphical representation in a destination display area, the destination display area being any display area other that the display area from which said selected object is removed. By presenting all objects in a display area, a user may more easily keep track of numerous objects and their special relationships, whilst uncluttering his view of a set of objects of particular significance. In this way, user errors are avoided and user efficiency improves, leading to lower system demands over time.

In a development of the first aspect, the method comprises the further steps of receiving a predefined user input, and responsive to the predefined user input displaying all objects in one said display area. By easily reversing the separation of objects, a user may more easily keep track of numerous objects and their special relationships, further reducing user errors and improving efficiency, leading to still lower system demands over time,

In a development of the first aspect, the method comprises the further steps of receiving a predefined user input, and responsive to said predefined user input displaying the objects in respective display areas as a function of a categorization of the objects, where objects having related categorizations are displayed in the same display area. By presenting all objects grouped on the basis of categorization, a user may more easily grasp relationships between objects.

In a development of the first aspect the categorization reflects any one of density, shape, volume, aspect ratio or weight.

In a development of the first aspect, the method comprises the further step of identifying the shape of each object by comparison to a library of object models, and wherein the categorisation corresponds to the identified shape of each object. By categorizing objects on the basis of comparison to a library of models, relationships may be established with minimal foreknowledge of the content of the environment, thereby avoiding the system resource cost of generating, storing and managing such data.

In a development of the first aspect, the method comprises the further steps of receiving a predefined user input, and responsive to the predefined user input displaying the objects in respective display areas in such a way as to achieve the best possible view of all objects, given the current virtual camera position and orientation. By distributing and displaying the objects for optimal visibility, the amount of manipulation by the user is reduced, reducing demands on processing and memory resources.

In a development of the first aspect, the method comprises the further steps of subsequent to the step of removing the selected object from the first display area and prior to the step of and adding to the destination display area, of representing the selected object in one or more intermediate positions between its starting position in one display area and its final position in said destination display area. The user's intuitive understanding of the location of different objects is thus further improved, further reducing user errors and user improving efficiency, leading to lower system demands over time.

In a development of the first aspect, the steps of removing the selected object from the first display area, representing said selected object in one or more intermediate positions between its starting position in one display area and its final position in the destination display area, and adding to the destination display area are synchronised with a drag and drop type interface interaction. The user's intuitive understanding of the location of different objects is thus further improved, further reducing user errors and user improving efficiency, leading to lower system demands over time.

In a development of the first aspect, the objects in each said display area are displayed from the point of view of a first virtual camera position with respect to said three dimensional computer generated environment.

In a development of the first aspect, the objects in one or more display areas are displayed from the point of view of a first virtual camera position with respect to the three dimensional computer generated environment, and one or more further display areas are displayed from the point of view of a second virtual camera position with respect to the three dimensional computer generated environment. The possibility of viewing different groups of objects from different orientations can reduce the amount of manipulation by the user is reduced, reducing demands on processing and memory resources.

In a development of the first aspect, the method comprises the further step of identifying the objects as objects in said three dimensional computer generated environment prior to said steps of displaying. By identifying objects in the environment, relationships may be established with minimal foreknowledge of the content of the environment, thereby avoiding the system resource cost of generating, storing and managing such data.

In a development of the first aspect, the step of identifying objects as objects comprises the steps of: selecting a first voxel having a scalar metadata value exceeding a predetermined threshold, assessing each voxel adjacent said first voxel, and selecting and tagging each adjacent voxel whose scalar metadata value threshold exceeds said predetermined scalar metadata value threshold, and repeating said steps of assessing, selecting and tagging for each voxel adjacent a tagged voxel until no further voxels meet the criteria for assessment, changing to a new first voxel and a new tag, and repeating said steps of selecting, assessing and changing until all voxels in said computer generated environment have been tagged, wherein each set of voxels with the same tag is taken to constitute an object.

In accordance with a second aspect there is provided an apparatus adapted to implement the first aspect.

In accordance with a third aspect there is provided an apparatus for managing display of multiple objects having a predefined spatial relationship in a three dimensional computer generated environment. This apparatus is adapted:
to cause the display of a graphical representation of a first subset of said objects in their respective spatial relationships in a first display area,
to cause the display of display a graphical representation of all of said objects not belonging to said first subset in their respective spatial relationships in one or more further display areas,
to cause the removal of a selected said object from either said first display area or one of further display areas, and to cause the addition of said selected object to the graphical representation in a destination display area, said destination display area being any said display area other that the display area from which said selected object is removed.

In a fourth aspect there is provided a computer program adapted to implement the steps of the first aspect.

### Brief Description of the Drawings

The above and other advantages of the present invention will now be described with reference to the accompanying drawings, in which:
Figure 1 demonstrates some of the ways in which an article may be obscured in a scan;
Figure 2 shows a set of object in a three dimensional computer generated environment;
Figure 3 shows a sub-optimal view of the objects of figure 2;
Figure 4 shows the steps of a method in accordance with an embodiment;
Figure 5 shows a set of representation in accordance with an embodiment in a first aspect;
Figure 6 shows a set of representation in accordance with an embodiment in a second aspect;
Figure 7 shows a set of representation in accordance with an embodiment in a third aspect;
Figure 8 shows a set of representation in accordance with an embodiment in a fourth aspect;
Figure 9 shows a method according to an embodiment;
Figure 10 is a more detailed implementation of the method of figure 9;
Figure 11 shows an example of the application of steps of the method of figure 10 to a specific collection of voxels;
Figure 12 shows the object identified in the example of figure 11;
Figure 13 shows the object that may be identified with a lower opacity threshold;
Figure 14 represents the selected voxels of figure 11 as a tree;
Figure 15 shows a generic computing system suitable for implementation of embodiments of the invention;
Figure 16 shows a smartphone device adaptable to constitute an embodiment;
Figure 17 shows an object scanner system adaptable to constitute an embodiment; and
Figure 18 shows a body scanner system adaptable to constitute an embodiment.

### Detailed description

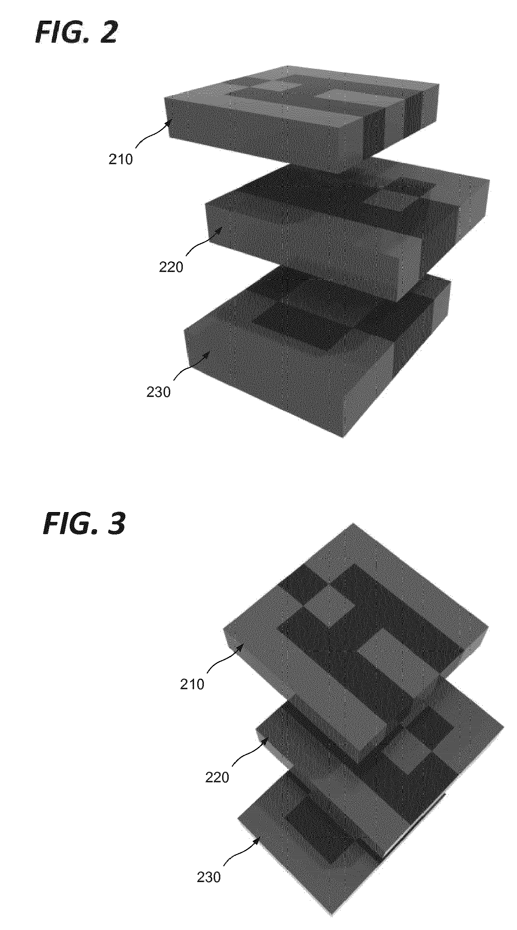

Figure 2 shows a set of object in a three dimensional computer generated environment. As shown, the environment contains a first object "A", 210, a second object "B" 220 and a third object "C" 230. The point of view in figure 2 has been selected so that a fairly unobstructed view of each object is provided, whilst also giving a good view of the salient features of the objects, for example making it possible to read the characters A, B and C on the surfaces of these objects. It will be appreciated that in many cases, it may not be possible to adopt this optimal viewing position, because other intervening objects will block the view.

Accordingly, it will often be necessary to adopt a sub-optimal point of view.

Figure 3 shows a sub-optimal view of the objects of figure 2. A shown in figure 3, the same three objects 210, 220 and 230 are represented, however the virtual camera position defining the position and orientation of the point of view in the virtual environment is closer to an angle perpendicular to the closest object 210, so that the object 220 is partially obscured by object 210 and the object 230 is partially obscured by both object 210 and object 220.

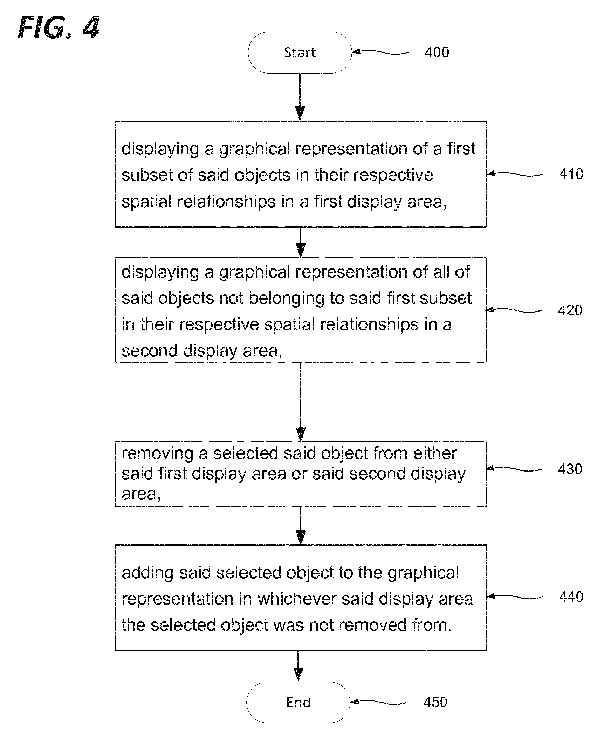

Figure 4 shows the steps of a method in accordance with an embodiment.

As shown in figure 4, there is provided a method for managing display of multiple objects having a predefined spatial relationship in a three dimensional computer generated environment such as that shown in figures 2 and 3 for example.

As shown, the method starts at step 400 before proceeding to step 410 at which a graphical representation of a first subset of said objects is displayed in their respective spatial relationships in a first display area, and then proceeds to step 420 at which a graphical representation of all of the objects not belonging to the first subset are displayed in their respective spatial relationships in a second display area.

The method then proceeds to step 430 at which a selected object is removed from either said first display area or said second display area, before proceeding to step 440 at which the selected object is added to the graphical representation in whichever said display area the selected object was not removed from.

As such, a three dimensional computer generated virtual environment can be broken down into a set of objects X, where the first subset Y ⊆ X, and where, with respect to the second subset Z, Z \ Y = Ø.

It will be appreciated that the order of the steps of displaying the first set of objects 410 and displaying the second set of objects 420 may be reversed, or the two steps may be carried out together.

It will be appreciated that the order of the steps of removing a selected object form either the first display area or the second display area 430 on one hand, and adding the selected object to the graphical representation in whichever display area the selected object was not removed from 440 on the other may be carried out together.

By this means, the two display areas taken together will at any time (other than in the interval between steps 430 and 440, if any) show every one of the objects in the environment (to the extent that they are visible with the current camera position and orientation settings), although the distribution of the objects between the first and second display areas may change over time, they will generally be visible to the user in one display area or the other. By this means, the risk of losing or forgetting an object, or losing track of the interrelationship of the various objects is reduced.

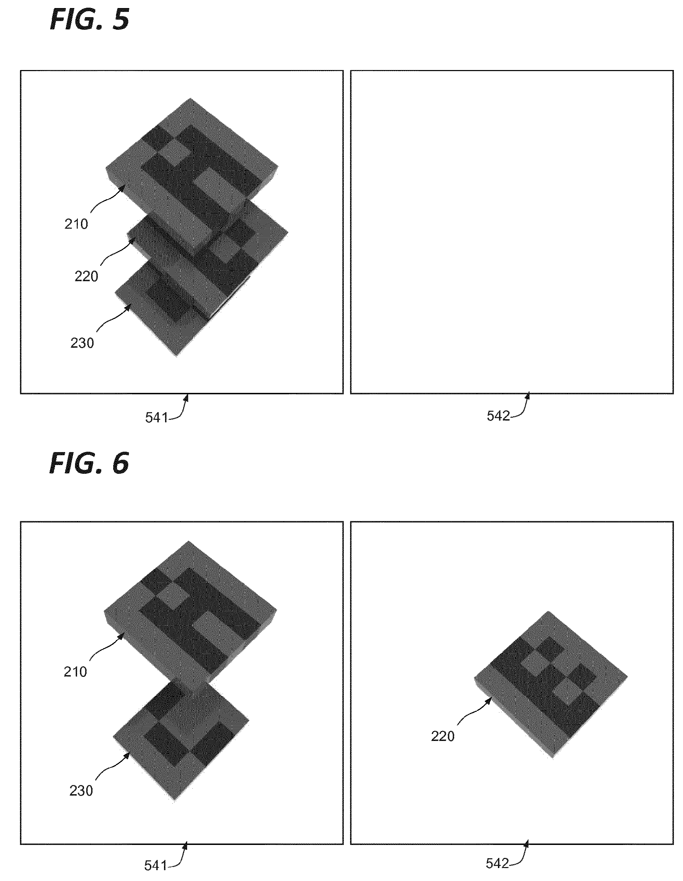

Figure 5 shows a set of representation in accordance with an embodiment in a first aspect.

As shown in figure 5, the same three objects 210, 220 and 230 as described with reference to figure 2 represented, in the same sub-optimal arrangement as described with reference to figure 3 whereby the virtual camera position defining the position and orientation of the point of view in the virtual environment is closer to an angle perpendicular to the closest object 210, so that the object 220 is partially obscured by object 210 and the object 230 is partially obscured by both object 210 and object 220. The three objects 210, 220 230 are displayed in a first display area 541, while a second display area 542 is shown as being empty.

Figure 6 shows a set of representation in accordance with an embodiment in a second aspect.

As shown in figure 6, the same three objects 210, 220 and 230 as described with reference to figure 2 are represented, in the same sub-optimal arrangement as described with reference to figure 3. However, in this aspect the second object "B" 220 has been removed from the first display area 541 and added to the second display area 542 in accordance with the steps 430 and 440 respectively of the method of figure 4. Accordingly, despite the sub-optimal orientation of the virtual camera, a clear view is afforded of all three objects, which nevertheless retain their respective spatial relationships and orientations.

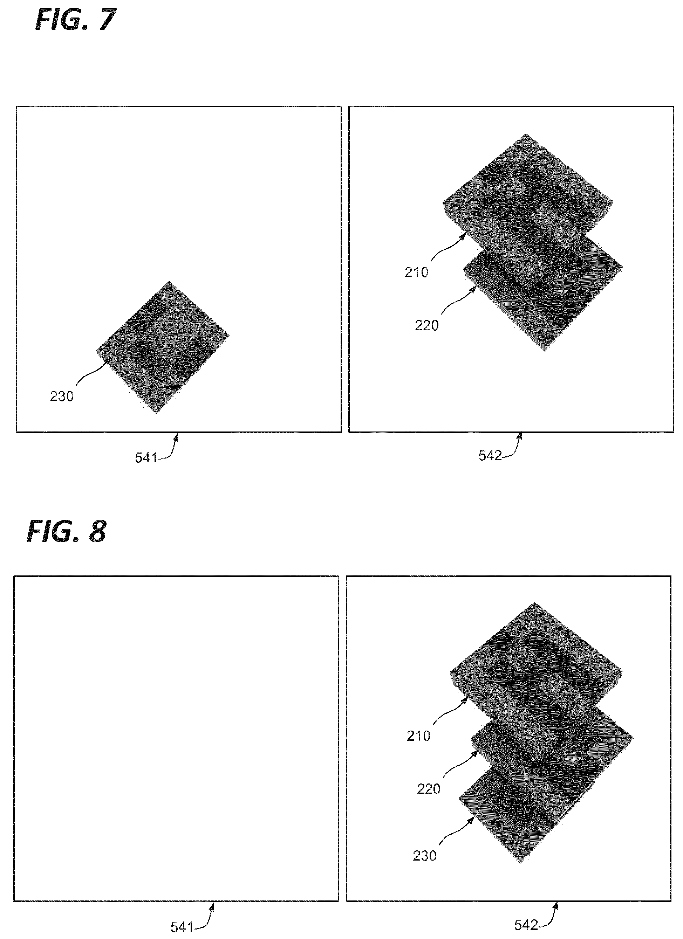

Figure 7 shows a set of representation in accordance with an embodiment in a third aspect.

As shown in figure 7, the same three objects 210, 220 and 230 as described with reference to figure 2 are represented, in the same sub-optimal arrangement as described with reference to figure 3. The second object "B" 220 remains in the second display area 542 as described with respect to figure 6. Furthermore, in this aspect the first object "A" 210 has been removed from the first display area 541 and added to the second display area 542 in accordance with the steps 430 and 440 respectively of the method of figure 4. Accordingly, despite the sub-optimal orientation of the virtual camera, an entirely unhindered view of the third object "C" 230 is afforded in the first display area 541, while the three objects nevertheless retain their respective spatial relationships and orientations.

Figure 8 shows a set of representation in accordance with an embodiment in a fourth aspect.

As shown in figure 8, the same three objects 210, 220 and 230 as described with reference to figure 2 are represented, in the same sub-optimal arrangement as described with reference to figure 3. The first and second objects "A" 210 and "B" 220 respectively remain in the second display area 542 as described with respect to figure 7. Furthermore, in this aspect the third object "C" 230 has been removed from the first display area 541 and added to the second display area 542 in accordance with the steps 430 and 440 respectively of the method of figure 4. Accordingly, despite the sub-optimal orientation of the virtual camera, a user can see that the first display area 541 is now entirely empty, so that the user can be sure that every object has been enumerated by moving from one display to the other.

In accordance with certain embodiments, there may be provided more than two display areas, with the complete set of objects being distributed amongst any or all of them in whatever way best suits the user.

In accordance with certain embodiments, there may be provided short-cut interface features such as keyboard short-cuts, display hot zones etc, which when activated may cause predetermined operating on the objects with respect to the different display areas. For example, such interface features may cause all objects to be gathered in one particular display area, or to be distributed in accordance with a particular algorithm amongst the different display areas. Examples of such algorithms may include:
- Grouping together in the same display area objects having similar properties (such as density, size, shape, volume, aspect ratio, weight, etc.)
- Identifying the type of each object with reference to a library of object models and grouping together in the same display area objects of similar or identical type.
- Distributing the objects amongst the available display areas in such a way as to achieve the best possible view of all objects, given the current virtual camera position and orientation.

It is also possible to use a combination of these different approaches, possibly with different respective weightings.

In accordance with certain embodiments, there may be provided one or more intervening steps between been step 430 of removing the selected object from the first display area 541 and adding to the second display area 542 at step 440, during which the selected object may be represented in one or more intermediate positions between its starting position in one display area and its final position in another display area, so as to provide a semblance of movement of the selected object from one display area to the other. This animated effect may further help the user maintain an intuitive relationship with the objects. Still further, this process may be synchronised with a drag and drop type interface interaction, so that the user has the impression of actually physically moving the objects from one display area to the other.

In the embodiment of figures 5, 6, 7 and 8, the objects 210, 220 and 230 are each shown in the same orientation in each figure, representing the fact that in accordance with this embodiment the virtual camera position and orientation is identical for the two display areas. In this context, the user may change the camera position or orientation so as to explore the virtual environment, and the different view will tilt, pan, zoom, etc. identically and in synchronisation.

In certain embodiments, the different display areas may be uncoupled, so that a different camera position and orientation is defined for each, making it possible for the user to observe the different sets of objects from different points of view. In this way, the user may observe the same object from different points of view by shifting it from one view to another as described above.

In this context, short cuts may be provided for moving certain objects, selected for example in line with the selection algorithms suggested above, from one display area to another so as to present that set of objects from a different point of view.

A short cut may be provided for decoupling the point of view of the displays as described above, and furthermore for re-synchronising the displays with respect to a single preferred camera position and orientation, which may be predefined, or the current camera position and orientation of a selected display area, or otherwise.

The three dimensional computer generated environment may defined in terms of voxels, polygons or any other such data structure. Often such structures will not inherently distinguish between separate objects insofar as they are in contact with each other, thus providing limited support for a method such as that of figure 4. Accordingly, in certain embodiments there may be provided an additional step prior to the step of displaying a graphical representation of a first subset of the objects in their respective spatial relationships in the first display area, of identifying the objects in the three dimensional computer generated environment.

In a case where the three dimensional computer generated environment is defined in terms of voxels, the identification of objects may be implemented by way of example as follows.

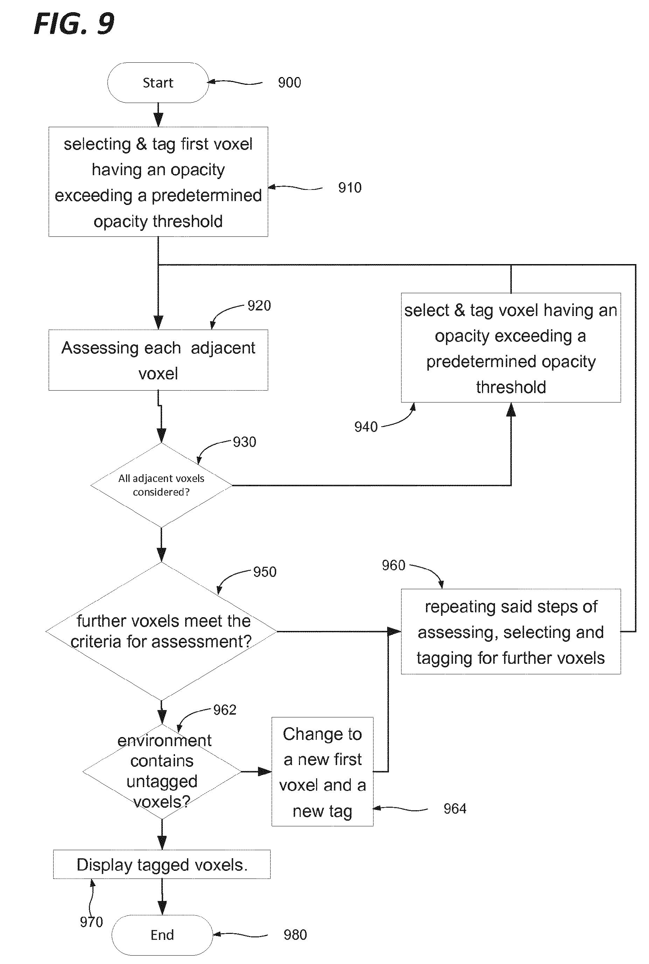

Figure 9 shows a method according to an embodiment.

As shown in figure 9 there is provided a method of selecting voxels for display in a computer generated image based on a three dimensional volume defined by a collection of voxels. The method starts at step 900 before proceeding at step 910 to select a first voxel having a scalar metadata value exceeding a predetermined scalar metadata value threshold. For the purposes of the present example, the scalar metadata value will be assumed to represent the opacity associated with the voxel, however the scalar metadata value may have any meaning, representing for example colour, density, etc. The method next proceeds to step 920, at which each voxel adjacent the first voxel is assessed. For any adjacent voxel whose opacity threshold exceeds the predetermined opacity threshold the method proceeds to step 940 at which that voxel is selected and tagged. Once all adjacent voxels have been assessed for a given selected voxel, the method proceeds to Step 950 at which it is considered whether other voxels meet the criteria for assessment (i.e. being adjacent a tagged voxel and exceeding the predetermined opacity threshold) in which case the method loops back via step 960 to repeat the steps of assessing 920, and selecting and tagging 940 for each voxel adjacent a tagged voxel until no further voxels meet the criteria for assessment, whereupon the method proceeds to step 962 at which it is determined whether any voxel in the environment remain untagged. If it is determined that there remain untagged voxels, the method proceeds to step 964, where a new tag and a new first voxel are selected, whereafter the method loops back to step 960, starting a new cycle of assessing, selecting and tagging. If at step 962 it is determined that all voxels in the environment have been tagged, the method proceeds display all of the tagged voxels at step 970.

The process of figure 9 may thus be iterated to identify the objects in an environment, by changing to a new first voxel and a new tag, and repeating said steps of selecting, assessing and changing until all voxels in said computer generated environment have been tagged. On this basis, each set of voxels with the same tag is taken to constitute an object.

The step of displaying the tagged voxels may be omitted altogether, or carried out at some arbitrary later time as desired.

There objects may be divided between any number of display areas. In some embodiments, there are two display areas, such that the one or more further display areas comprise a second display area, and the step of removing a selected said object from either the first display area or one of the further display areas, and adding the selected object to the graphical representation in a different display area comprises removing a selected object from either the first display area or the second display area, and adding the selected object to whichever display area the selected object was not removed from.

It will be appreciated that the basic underlying approach of figure 9 may be achieved by a variety of different mechanisms. The process of assessing the voxels adjacent a currently selected voxel may involve assessing each adjacent voxel may be carried out for each adjacent voxel in turn, or each may be assessed in parallel. The assessment process may be multistep in nature, for example first considering whether the voxel in question is already tagged, and then considering whether it meets the opacity criterion. In some embodiments, voxels might be tagged when they fail to meet the criteria rather than when they do meet it, or all voxels assessed may be tagged to indicate whether or not they meet the opacity threshold.

The definition of any objects identified in accordance with these steps may in some embodiments be retained for later reference. For example, the tagging of each new object may be specific to that object, or alternatively a registry of which voxels have been grouped together as an object may be compiled. Accordingly, by multiple applications of the described method the three dimensional environment may be defined in terms of a collection of objects, rather than a mere matrix of voxels. Furthermore, this approach may accelerate the process for subsequent applications of the process, since voxels that have already been identified as belonging to a first object can be excluded from the process.

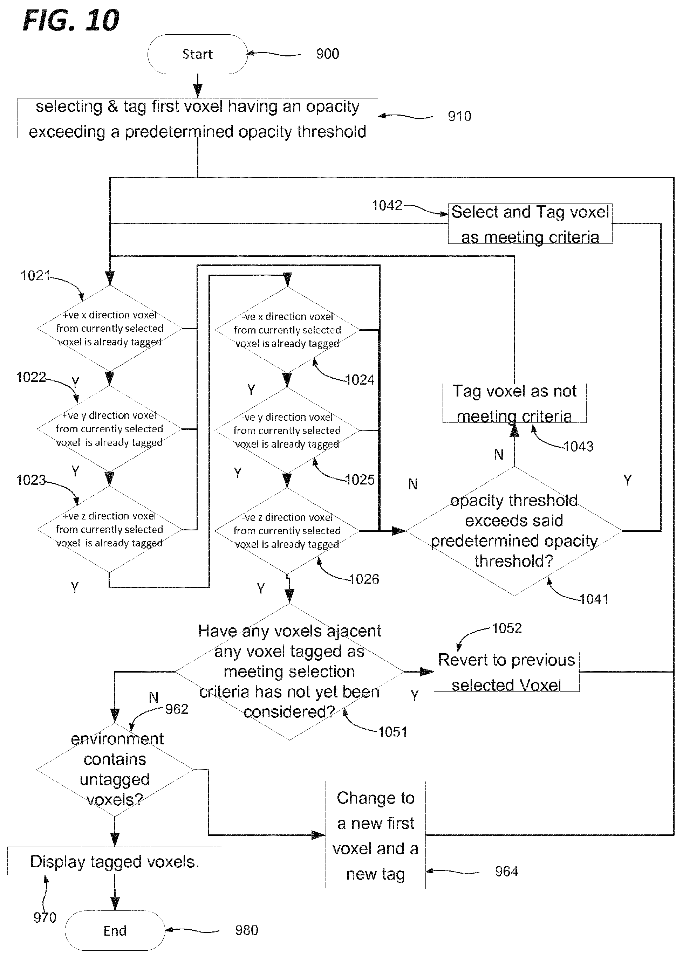

Figure 10 is a more detailed implementation of the method of figure 9. As shown in figure 10, the method starts at step 900 before proceeding at step 910 to select a first voxel having an opacity exceeding a predetermined opacity threshold. The method next proceeds to step 1021, at which it is determined whether the voxel adjacent the first voxel in the positive x direction has already been tagged. If the voxel has not been tagged, the method proceeds to set 1041, at which it is determined whether the voxel under assessment exceeds the opacity threshold. If the threshold is exceeded the voxel under assessment is tagged as meeting the selection criteria and selected as the frame of reference for the next assessments of adjacent voxels at step 1042. Otherwise the voxel is tagged as not meeting the selection criteria at step 1043, and the method then reverts to step 1021. Assuming the adjacent voxel in the positive x direction did not meet the opacity threshold, the method will now proceed to step 1022 from step 1021, since the adjacent voxel in the positive x direction is now tagged as not meeting the selection criteria. The process will now repeat for each adjacent voxel in turn, with step 1022 assessing the adjacent voxel in the positive y direction, step 1023 assessing the adjacent voxel in the positive z direction, step 1024 assessing the adjacent voxel in the negative x direction, step 1025 assessing the adjacent voxel in the negative y direction and step 1026 assessing the adjacent voxel in the negative z direction. For a given selected voxel, the method will eventually determine that all of the adjacent voxels have been tagged, either as meeting the selection criteria, or not, and will reach step 1051 at which the method considers whether an voxels adjacent a voxel tagged as meeting the selection criteria has not yet been assessed. This will occur where the method selects a new voxel as the point of reference for the assessment of adjacent voxels at step 1042, in which case any voxels not already assessed will be temporarily disregarded, until the method reverts to them at step 1052. If on the other hand it is determined at step 1051 that all voxels adjacent any voxels tagged as meeting the selection criteria have been tagged (as not meeting the selection criteria) then the arborescence is fully explored, whereupon the method proceeds to step 962 at which it is determined whether any voxel in the environment remain untagged. If it is determined that there remain untagged voxels, the method proceeds to step 964, where a new tag and a new first voxel are selected, whereafter the method loops back to step 960, starting a new cycle of assessing, selecting and tagging. If at step 962 it is determined that all voxels in the environment have been tagged, the method proceeds display all of the tagged voxels at step 970 before terminating at step 980.

The process of figure 9 may thus be iterated to identify the objects in an environment, by changing to a new first voxel and a new tag, and repeating said steps of selecting, assessing and changing until all voxels in said computer generated environment have been tagged. On this basis, each set of voxels with the same tag is taken to constitute an object.

In some embodiments the opacity threshold may be two-fold, stating that voxels must not only exceed a minimum value, but also fall below a maximum value.

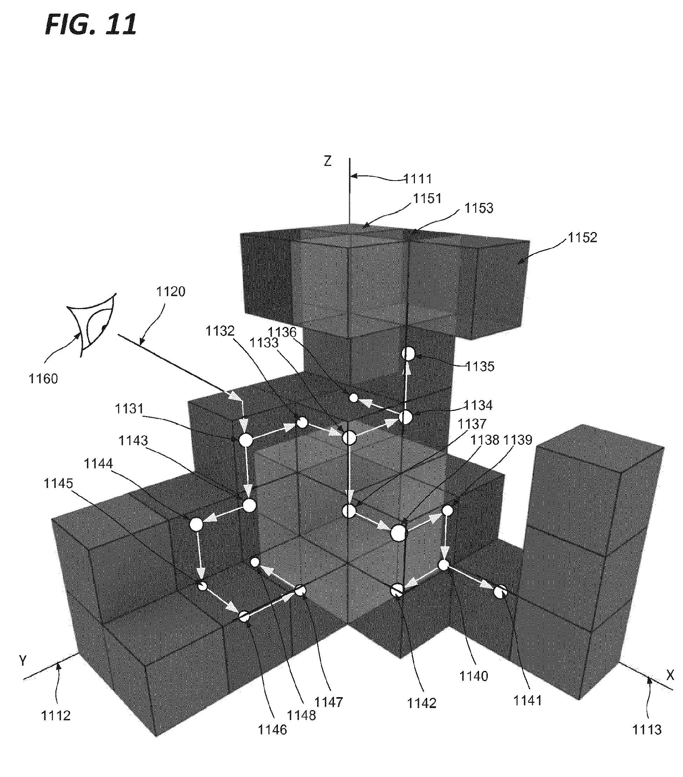

Figure 11 shows an example of the application of steps of the method of figure 10 to a specific collection of voxels.

Figure 11 shows a collection of voxels in a three dimensional space defined by x, y and z axes 1111, 1112, 1113. As shown, the voxels are classified as belonging to one of four opacity levels. In the context of the application of figure 1, opacity is aligned with density. The densest voxels as shown in figure 11 are pale and opaque (voxel 1151 for example), the next densest are mid grey and somewhat transparent (voxel 1152 for example), the next densest still are dark grey and highly transparent (voxel 1153 for example), and the least dense category of voxel are not rendered for the sake of clarity. For the purposes of the present example, the opacity threshold is defined as the opacity of the medium density voxels.

The first selected voxel may be selected in a variety of different ways. For example, it may be selected as being the closest to the current position of the virtual camera 1160 defining a user's point of view, which meets the predefined opacity threshold. On this basis, in view of the position an orientation of the virtual camera 1160 and the predefined opacity threshold, for the purposes of the present example, the first selected voxel is voxel 1131. Accordingly there is provided a further step of determining a virtual camera position, and establishing a straight path between the part of said object and said virtual camera position, whereby the first voxel is selected as being the voxel nearest said virtual camera position situated along said path and exceeding said predetermined opacity threshold.

In accordance with the method of figure 10, the method considers the voxel in the positive x direction from voxel 1131. This voxel is not tagged, but does not meet the opacity threshold. The method then considers the voxel in the positive y direction. This voxel is not tagged, but does not meet the opacity threshold. The method then considers the voxel in the positive z direction. This voxel is not tagged, but does not meet the opacity threshold. The method then considers the voxel in the negative x direction. This voxel is not tagged, but does not meet the opacity threshold. The method then considers the voxel 1132 in the negative y direction. This voxel is not tagged, and does meet the opacity threshold. Accordingly voxel 1132 is tagged as meeting the selection criteria, and selected as the basis for the next round of assessments. It will be noted here that voxel 1142 also meets the opacity threshold, but has not yet been assessed. The assessment process is repeated for voxel 1132, which leads to the selection of voxel 1133, then 1134, then 1135. When performing the assessment for voxel 1135, it is determined that none of the adjacent voxels satisfies the opacity threshold, apart from voxel 1134, which is already tagged, so that no new voxel can be selected. Accordingly the method proceeds to step 1051 as described above, at which it is determined that voxel 1136 is adjacent voxel 1134 which is tagged as meeting the criteria for selection, but has not yet been assessed. Accordingly, the selection reverts to voxel 1134. This time, voxel 1135 is disregarded as already being tagged, and the selection proceeds to voxel 1136. In a similar way, the selection then reverts to voxel 1133 before proceeding through voxels 1137, 1138, 1139, 1140 and 1141, and then reverts to 1140 to reach 1142, then reverts to 431 to explore the branch comprising voxels 1143, 1144, 1145, 1146, 1147 and 1148. By this means, the method has tagged each of the contiguous voxels meeting the opacity threshold starting from the chosen first selected voxel 1131.

In accordance with the method of figures 9 or 10, the method may then proceed to repeat this process for the other objects of the environment.

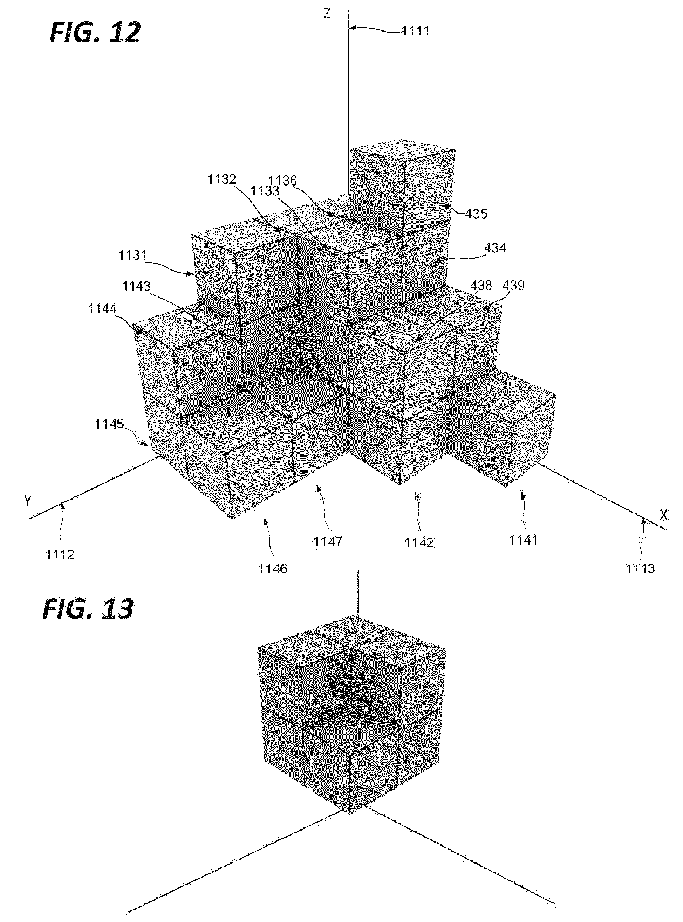

Figure 12 shows the object identified in the example of figure 11. The visible voxels 1131, 1132, 1133, 1134, 1135, 1136, 1137, 1138, 1139, 1141, 1142, 1143, 1144, 1145, 1146, 1147 are shown, whilst voxels 1140 and 1148 are obscured. All of the other voxels of figure 11, which were not tagged as meeting the criteria for selection have been removed in the displayed image, providing a clearer view of the identified object.

It will be appreciated that the definition of the object will depend heavily on the choice of the opacity threshold.

Figure 13 shows the object that may be identified with a lower opacity threshold. In the example of figures 11 and 12 as presented above, the method is applied with an opacity threshold corresponding to the lowest opacity level of the illustrated Voxels. If the highest opacity level were selected, as represented by voxel 1151 for example, a smaller object would be defined, representing the dense core of the object as shown in figure 13.

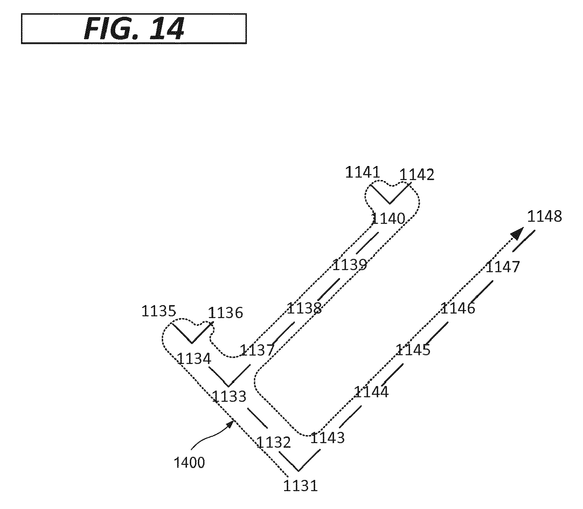

Figure 14 represents the selected voxels of figure 11 as a tree. It will be appreciated that the described in detail with respect to figure 11 implements a tree crawl. As described with respect to figure 11, above the process follows a branch to its extremity (a depth-first search), and then backtracks to the nearest unexplored fork, and so on as represented by the dotted line 1400. Other equivalent algorithms may revert to the furthest unexplored fork, or explore every possibility at each level of arborescence before proceeding to the next level (a breadth-first search). In such an algorithm, the voxels might be selected in the order 1131, 1132, 1143, 1132, 1133, 1134, 1137, 1144, 1135, 1136, 1145, 1138, 1146, 1139, 1147, 1140, 1147, 1141, 1142, 1148, etc. Tree search algorithms is a domain of academic research in its own right, and embodiments may incorporate any such algorithm as required by suitable configuration at the relevant steps, in particular the step 960 of "repeated the steps of assessing selecting and tagging further voxels".

In accordance with certain embodiments, the process described with respect to figures 9 or 10 may be performed in real time in response to user input specifying different scalar metadata value threshold values, so that the user can immediately see the effect of the changes in scalar metadata value threshold value. Such user input may be input by means of slider bar, scroll wheel etc so that the user can rapidly try different values and identify that giving the most visually convincing results.

In accordance with certain embodiments, the process described with respect to figures 9 or 10 may be repeated for the same set of voxels and the same first selected voxel, but with a range of different scalar metadata value threshold values. The resulting objects may be displayed sequentially to the user, giving the user the opportunity to select the most visually convincing representation of the object in question.

In accordance with certain embodiments, the process described with respect to figures 9 or 10 may be repeated for the same set of voxels and the same first selected voxel, but with a range of different scalar metadata value threshold values. The resulting objects may be displayed together in multiple representations of the same view to the user giving the user the opportunity to select the most visually convincing representation of the object in question.

the process described with respect to figures 9 or 10 may be repeated for the same set of voxels and the same first selected voxel, but with a range of different scalar metadata value threshold values. The resulting objects may be compared to a library of known objects, and the scalar metadata value threshold providing the object corresponding most closely to the library model may be retained for presentation of the object to the user.

In the foregoing examples, adjacent voxels have been taken to be those having a face in common. In other embodiments the term may be extended in include voxels having a vertex in common, and still further, to voxel within a predetermined radius, or with a predetermined number of intervening voxels.

The foregoing embodiments have been described on the basis of voxels arranged in a cubic lattice. It will be appreciated that other voxel type structures are known, such as based on regular octahedrons and tetrahedrons, rhombic do-decahedra and truncated octahedral, etc. and that the process of figure 9 is applicable to any such structure so long as there it is possible to explicitly identify adjacent voxels.

In accordance with certain embodiments, objects in a voxel based computer generated three dimensional environment are identified by crawling through adjacent voxels meeting a predetermined criterion with respect to a scalar metadata value associated with each voxel, such as opacity or density. These adjacent voxels may be explored in accordance with a tree-crawling algorithm such as a breadth first or depth first algorithm. Once all adjacent cells meeting the criterion are identified, these are determined to represent a discrete object, and displayed as such. The starting point for the crawling process may be the voxel closest to a virtual camera position along the line of sight of that virtual camera meeting the criterion.

In certain embodiments, the objects present in a particular computer generated 3D environment are represented to a user as distributed amongst a plurality of display area. The relative positions of the objects are maintained, and whenever an object is removed from one display area it is added to another. The point of view presented to the user may be the same for each display area, with all being controlled together, or separate control may be provided for each area or sub-group of areas.

The disclosed methods can take form of an entirely hardware embodiment (e.g. FPGA), an entirely software embodiment (for example to control a system according to the invention) or an embodiment containing both hardware and software elements. As such, embodiments may comprise a number of subsystems, functional elements or means adapted to implement the invention in communication with each other, and/or with standard fixed function or programmable elements for example as described below.

Software embodiments include but are not limited to applications, firmware, resident software,
microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.
In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device.

In accordance with certain embodiments, in order to browse between a collection of datasets susceptible of graphical representation, these datasets are associated with points on a sliding scale of one, two or three dimensions. When a point corresponding to a particular dataset is selected by a user via a mouse pointer or the like, it is rendered as a graphical representation and presented to the user. When an intermediate point is selected, an interpolation of the datasets corresponding to the nearby points is generated and the resulting dataset rendered as a graphical representation and presented to the user. The interaction may be implemented with a slider bar type widget having hybrid behaviour such that clicking on the bar causes the button to jump to the nearest point corresponding to a data, while sliding to a chosen intermediate position activates the interpolation of adjacent datasets.

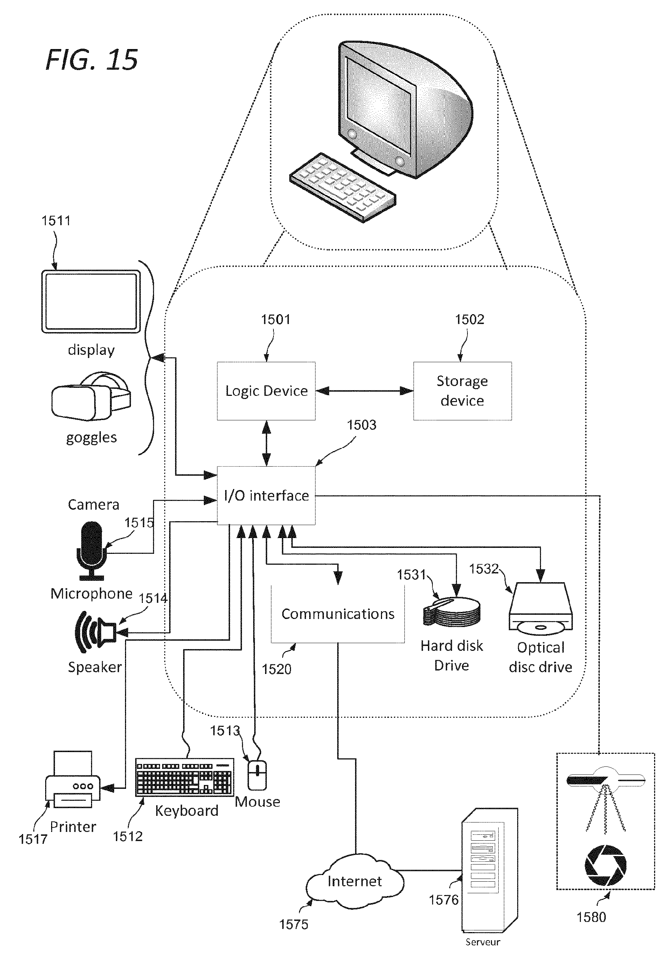

Figure 15 shows a generic computing system suitable for implementation of embodiments of the invention.

A shown in figure 15, a system includes a logic device 1501 and a storage device 1502. The system may optionally include a display subsystem 1511, input/output subsystem 1503, communication subsystem 1520, and/or other components not shown.

Logic device 1501 includes one or more physical devices configured to execute instructions. For example, the logic device 1501 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 1501 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 1501 optionally may be distributed among two or more separate devices, which may be remotely located and/or configured for coordinated processing. Aspects of the logic device 1501 may be virtualized and executed by remotely accessible, networked computing devices configured in a cloud-computing configuration.

Storage device 1502 includes one or more physical devices configured to hold instructions executable by the logic device to implement the methods and processes described herein. When such methods and processes are implemented, the state of storage 1502 device may be transformed-e.g., to hold different data.

Storage device 1502 may include removable and/or built-in devices. Storage device 1502 may comprise one or more types of storage device including optical memory (e.g., CD, DVD, HD-DVD, Blu-Ray Disc, etc.), semiconductor memory (e.g., FLASH RAM, EPROM, EEPROM, etc.), and/or magnetic memory (e.g., hard-disk drive, floppy-disk drive, tape drive, MRAM, etc.), among others. Storage device may include volatile, nonvolatile, dynamic, static, read/write, read-only, random-access, sequential-access, location-addressable, file-addressable, and/or content-addressable devices.

In certain arrangements, the system may comprise an interface 1503 adapted to support communications between the Logic device 1501 and further system components. For example, additional system components may comprise removable and/or built-in extended storage devices. Extended storage devices may comprise one or more types of storage device including optical memory 1532 (e.g., CD, DVD, HD-DVD, Blu-Ray Disc, etc.), semiconductor memory (not shown) (e.g., RAM, EPROM, EEPROM, FLASH etc.), and/or magnetic memory 1531 (e.g., hard-disk drive, floppy-disk drive, tape drive, MRAM, etc.), among others. Such extended storage device may include volatile, nonvolatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 1501 and storage device 1502 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 15 may be used to implement embodiments of the invention.

For example a program implementing the steps described with respect to figure 2, 3, 9 or 10 may be stored in storage device 1502 and executed by logic device 1501. Data used for the creation of the graphical representation of the datasets comprising the voxels and their associated scalar metadata may be stored in storage 1502 or the extended storage devices 1532 or 1531 and the display 1511 used to display the graphical representation.

In some cases, the computing system may comprise or be in communication with a scanner 1580 or other three dimensional imaging system as described above. This communication may be achieved by wired or wireless network, serial bus, firewire, Thunderbolt, SCSI or any other communications means as desired. In such cases, a program for the control of the scanner 1580 and/or the retrieval of data therefrom may run concurrently on the logic device 1501, or these features may be implemented in the same program as implementing the steps described with respect to figure 2, 3, 9 or 10.

Accordingly the invention may be embodied in the form of a computer program.

Furthermore, when suitably configured and connected, the elements of figure 15 may constitute an apparatus adapted to generate a graphical representation of a dataset, and cause a display device to display said representation; this apparatus may further be adapted to receive data from an eye tracking system indicating a point of regard. The apparatus may comprise storage for compiling a record of the point of regard over a duration, and the apparatus may further be adapted to modify the graphical representation to indicate the proportion of the duration for which said point of regard was directed at each point in said representation. This point of regard may then be assimilated to the selected point and/or the cursor as described above.

It will be appreciated that a "service", as used herein, is an application program executable across multiple user sessions. A service may be available to one or more system components, programs, and/or other services. In some implementations, a service may run on one or more server-computing devices.

When included, display subsystem 1511 may be used to present a visual representation of data held by a storage device. This visual representation may take the form of a graphical user interface (GUI). As the herein described methods and processes change the data held by the storage device 1502, and thus transform the state of the storage device 1502, the state of display subsystem 1511 may likewise be transformed to visually represent changes in the underlying data. Display subsystem 1511 may include one or more display devices utilizing virtually any type of technology for example as discussed above. Such display devices may be combined with logic device and/or storage device in a shared enclosure, or such display devices may be peripheral display devices.

When included, input subsystem may comprise or interface with one or more user-input devices such as a keyboard 1512, mouse 1513, touch screen 1511, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 1520 may be configured to communicatively couple computing system with one or more other computing devices. For example, communication module of may communicatively couple computing device to remote service hosted for example on a remote server 1576 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 1574, or a wired or wireless local- or wide-area network. In some embodiments, the communication subsystem may allow computing system to send and/or receive messages to and/or from other devices via a network such as Internet 1575. The communications subsystem may additionally support short range inductive communications with passive devices (NFC, RFID etc).

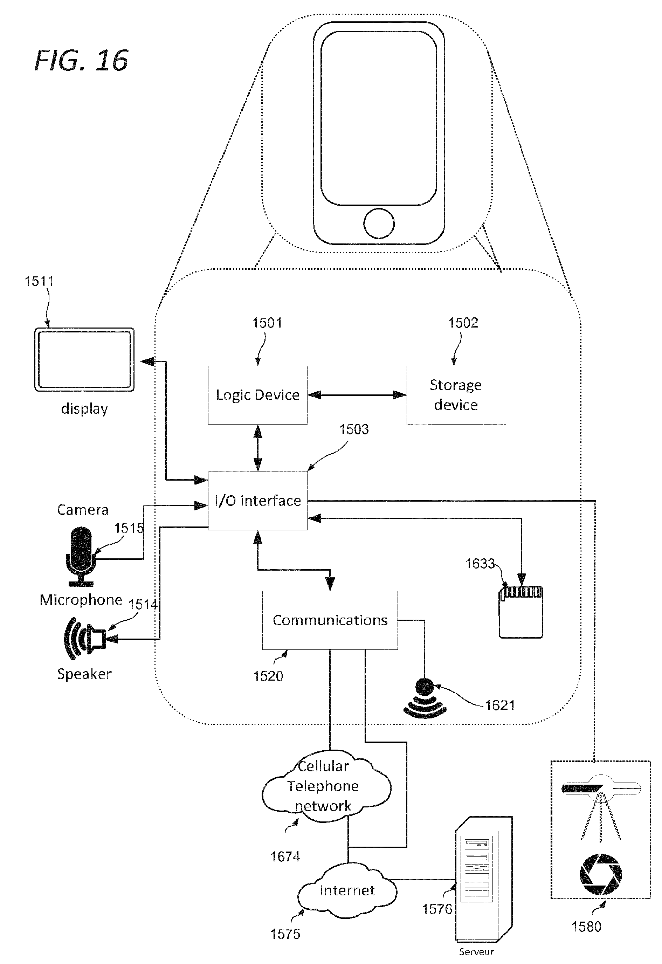

The system of figure 15 is intended to reflect a broad range of different types of information handling system. It will be appreciated that many of the subsystems and features described with respect to figure 15 are not required for implementation of the invention, but are included to reflect possible systems in accordance with the present invention. It will be appreciated that system architectures vary widely, and the relationship between the different sub-systems of figure 15 is merely schematic, and is likely to vary in terms of layout and the distribution of roles in systems. It will be appreciated that, in practice, systems are likely to incorporate different subsets of the various features and subsystems described with respect to figure 15. Figures 16, 17 and 18 disclose further example devices in accordance with the present invention. Those of ordinary skill in the art will appreciate that systems may be employed in the future which also operate in accordance with the present invention.

Figure 16 shows a smartphone device adaptable to constitute an embodiment. As shown in figure 6, the smartphone device incorporates elements 1501, 1502, 1503, 1520, near field communications interface 1621, flash memory 1633, elements 1514, 1515, and 1511 as described above. It is in communication with the telephone network 1674 and a server 1576 via the network 1575. Alternative communication mechanisms such as a dedicated network or WiFi may also be used. The device may also be in communication with the scanner device 1580. The features disclosed in this figure may also be included within a tablet device as well.

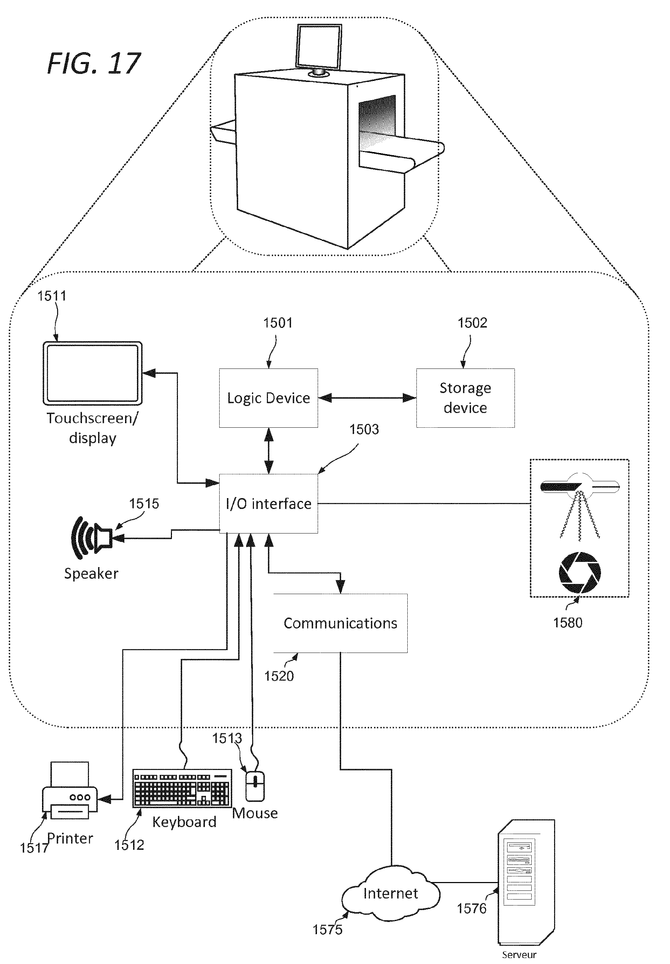

Figure 17 shows an object scanner system adaptable to constitute an embodiment. This is representative of the devices used in airports and the like for scanning baggage and other articles for concealed weapons or contraband. As shown in figure 17, object scanner system comprises elements 1501, 1502, 1503, 1520, 1521, 1515, and 1517, as described above. It may be in communication with a server 1576 via the network 1575. Alternative communication mechanisms such as a dedicated network or WiFi may also be used. The device is also in communication with the scanner hardware 1580.

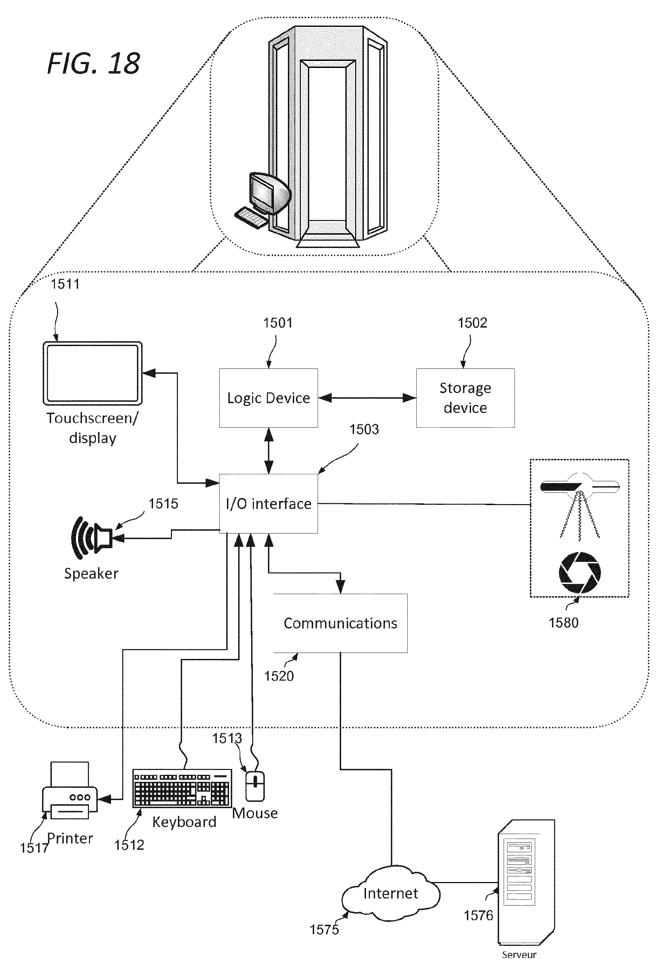

Figure 18 shows a body scanner system adaptable to constitute an embodiment. This is representative of the devices used in airports and the like for scanning individuals for concealed weapons or contraband. As shown in figure 18, object scanner system comprises elements 1501, 1502, 1503, 1520, 1521, 1515, and 1517, as described above. It may be in communication with a server 1576 via the network 1575. Alternative communication mechanisms such as a dedicated network or WiFi may also be used. The device is also in communication with the scanner hardware 1580.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method for managing display of multiple objects having a predefined spatial relationship in a three dimensional computer generated environment, said method comprising the steps of:
displaying a graphical representation of a first subset of said objects in their respective spatial relationships in a first display area,
displaying a graphical representation of all of said objects not belonging to said first subset in their respective spatial relationships in one or more further display areas,
removing a selected said object from either said first display area or one of said further display areas, and adding said selected object to the graphical representation in a destination display area, said destination display area being any said display area other that the display area from which said selected object is removed.

2. The method of any preceding claim comprising the further steps of receiving a predefined user input, and responsive to said predefined user input displaying all said objects in one said display area.

3. The method of claim 1 comprising the further steps of receiving a predefined user input, and responsive to said predefined user input, displaying said objects in respective display areas as a function of a categorization of said objects, where objects having related categorizations are displayed in the same display area.

4. The method of claim 3 wherein said categorization reflects any one of density, shape, size, volume, aspect ratio or weight.

5. The method of claim 3 comprising the further step of identifying the shape of each object by comparison to a library of object models, and wherein said categorisation corresponds to the identified shape of each object.

6. The method of any preceding claim comprising the further steps of receiving a predefined user input, and responsive to said predefined user input, displaying said objects in respective display areas in such a way as to achieve the best possible view of all objects, given the current virtual camera position and orientation.

7. The method of any preceding claim comprising the further steps subsequent to said step of removing the selected object from the first display area and prior to said step of and adding to the destination display area, of representing said selected object in one or more intermediate positions between its starting position in one display area and its final position in said destination display area.

8. The method of claim 7 wherein said steps of removing the selected object from the first display area, representing said selected object in one or more intermediate positions between its starting position in one display area and its final position in the destination display area, and adding to the destination display area are synchronised with a drag and drop type interface interaction.

9. The method of any preceding claim wherein the objects in each said display area are displayed from the point of view of a first virtual camera position with respect to said three dimensional computer generated environment.

10. The method of any of claims 1 to 8 wherein the objects in one or more said display areas are displayed from the point of view of a first virtual camera position with respect to said three dimensional computer generated environment, and one or more further said display areas are displayed from the point of view of a second virtual camera position with respect to said three dimensional computer generated environment.

11. The method of any preceding claim comprising the further step of identifying said objects as objects in said three dimensional computer generated environment prior to said steps of displaying.

12. The method of claim 11 wherein said step of identifying objects as objects comprises the steps of:
selecting a first voxel having a scalar metadata value exceeding a predetermined threshold,
assessing each voxel adjacent said first voxel, and selecting and tagging each adjacent voxel whose scalar metadata value threshold exceeds said predetermined scalar metadata value threshold, and repeating said steps of assessing, selecting and tagging for each voxel adjacent a tagged voxel until no further voxels meet the criteria for assessment,
changing to a new first voxel and a new tag, and
repeating said steps of selecting, assessing and changing until all voxels in said computer generated environment have been tagged,
wherein each set of voxels with the same tag is taken to constitute an object.

13. An apparatus adapted to implement the method of any preceding claim.

14. An apparatus for managing display of multiple objects having a predefined spatial relationship in a three dimensional computer generated environment, said apparatus adapted
to cause the display of a graphical representation of a first subset of said objects in their respective spatial relationships in a first display area,
to cause the display of display a graphical representation of all of said objects not belonging to said first subset in their respective spatial relationships in one or more further display areas,
to cause the removal of a selected said object from either said first display area or one of said further display areas, and to cause the addition of said selected object to the graphical representation in a destination display area, said destination display area being any said display area other that the display area from which said selected object is removed.

15. A computer program adapted to implement the steps of any of claims 1 to 12.
